Europäisches Patentamt

European Patent Office

Office européen des brevets

(19)

(11) Numéro de publication: **0 242 912 B1**

(12) **FASCICULE DE BREVET EUROPEEN**

(45) Date de publication de fascicule du brevet:
27.12.91

(51) Int. Cl.5: **H04L 27/22**

(21) Numéro de dépôt: 87200668.9

(22) Date de dépôt: 08.04.87

(54) Appareil de détection et de discrimination de sauts de phase dans un signal périodique et application à un signal téléphonique de tonalité avec inversions de phase.

(30) Priorité: 22.04.86 FR 8605784

(43) Date de publication de la demande:
28.10.87 Bulletin 87/44

(45) Mention de la délivrance du brevet:
27.12.91 Bulletin 91/52

(84) Etats contractants désignés:
BE DE FR GB IT NL SE

(56) Documents cités:
GB-A- 1 325 000
US-A- 3 146 400

IBM TECHNICAL DISCLOSURE BULLETIN, vol.
16, no. 5, octobre 1973, pages 1511-1512,
New York, US; J.D. SPRAGINS:
"Demodulation of differential phase-shifted
keyed signals"

(73) Titulaire: TELECOMMUNICATIONS RADIOE-
LECTRIQUES ET TELEPHONIQUES T.R.T.
88, rue Brillat Savarin
F-75013 Paris(FR)
(84) Etats contractants désignés:
BE DE GB IT NL SE

Titulaire: **TRT TELECOMMUNICATIONS RA-
DIOELECTRIQUES ET TELEPHONIQUES**
**88 rue Brillat Savarin**
**F-75013 Paris(FR)**
(84) Etats contractants désignés:
**FR**

(72) Inventeur: **Lassaux, Jean Société Civile**
**S.P.I.D.**
**209, rue de l'Université**
**F-75007 Paris(FR)**
Inventeur: **Stephan, Thierry Société Civile**
**S.P.I.D.**
**209, rue de l'Université**
**F-75007 Paris(FR)**

(74) Mandataire: **Pyronnet, Jacques et al**
**Société Civile S.P.I.D. 156, Boulevard Haus-**
**smann**
**F-75008 Paris(FR)**

## Description

L'invention concerne un appareil de détection et de discrimination de saut(s) de phase éventuel(s) de valeur $\Delta\phi_e$ prédéterminée dans un signal électrique périodique de fréquence $f_e$ présent dans un signal électrique d'entrée $e(t)$ sous forme d'échantillons numériques échantillonnés à la fréquence $f_S$, comportant au moins entre une borne d'entrée et une borne de sortie un interrupteur, un résonateur à fréquence $f_0$ et un séquenceur qui permet, à intervalles réguliers de durée $\alpha$ la détection de phase et la discrimination de chaque saut de phase éventuel de valeur $\Delta\phi_e$.

D'une façon générale se pose le problème d'avoir à détecter, dans un signal électrique périodique, des sauts de phase de valeur prédéterminée, ces valeurs étant d'ailleurs fréquemment des sous multiples de $\pi$. Dans le domaine de la communication, la modulation en phase est elle-même un moyen parmi d'autres pour véhiculer l'information ; dans ce cas, les sauts de phase se produisent avec un débit élevé et des appareils tels que les modems par exemple sont spécialement conçus pour émettre, recevoir ou générer ce type de signaux.

Le document de brevet US-A 3 146 400 divulgue un filtre manipulé utilisant un cristal comme élément intégrateur et qui constitue un dispositif de détection et de discrimination de phase constitué notamment d'un résonateur, d'un séquenceur et d'un interrupteur, dans lequel la détection de saut de phase est réalisée à intervalles réguliers, chacune des séquences de détection se décomposant en deux phases de fonctionnement, à savoir une première phase d'excitation du résonateur par le signal d'entrée et une deuxième phase dans laquelle le résonateur est bouclé et oscille sur lui-même à sa fréquence de résonance, la discrimination de phase étant réalisée sur ledit signal de résonance qui est en phase avec le signal d'entrée.

L'invention concerne plutôt la reconnaissance de signaux périodiques qui comportent des sauts de phase, de préférence un signal unique de forme rectangulaire ou sinusoïdale, dans la bande des fréquences vocales et dont les saints de phase, de valeur prédéterminée comprise entre $0°$ et $360°$, se produisent à intervalles réguliers. La détection de ces sauts de phase permet la commande à distance d'appareils, s'agissant par exemple du réseau électrique ou téléphonique.

Dans le domaine des communications téléphoniques, notamment se pose le problème général de l'écho d'origine électrique, dû généralement à une désadaptation d'impédances aux divers plans de raccordement 2 fils ou 4 fils des maillons mis en tandem pour constituer une liaison téléphonique ou d'un découplage imparfait entre accès réception et émission 4 fils des dispositifs de passage 2 fils/4 fils, définissant par làmême l'affaiblissement d'équilibrage, ou encore de la composition de ces deux phénomènes. La gêne apportée par un écho est d'autant plus importante que son niveau est plus fort et que son retard est plus grand. Pour remédier à l'écho électrique sur les circuits à long temps de propagation, deux types d'équipements font l'objet de recommandations au CCITT : les suppresseurs d'écho auxquels se rapporte **l'Avis G164 livre** jaune du CCITT édition 1981, Tome III.1, page 154 et suivantes et les annuleurs ou compensateurs d'écho dont traite **l'Avis G165, livre jaune du CCITT édition 1981, Tome** III.1, page 182 et suivantes. Les annuleurs d'écho constituent un progrès par rapport aux suppresseurs d'écho du fait que leur action est moins brutale et que par exemple, pour un signal de parole, ils permettent, à la réception, de diminuer le niveau du signal d'écho tout en conservant le signal d'information de parole lointaine à son niveau normal. Or le réseau téléphonique est de plus en plus utilisé pour, à côté des signaux de parole dont les terminaux sont des portes d'abonnés, transmettre des signaux de données, soit à l'alternat (semi-duplex) soit dans les deux sens de transmission simultanés (full-duplex), dont les terminaux sont constitués par des modems. La spécificité des signaux de données, l'existence d'un niveau égal à l'émission comme à la réception notamment, rend la transmission de ces signaux incompatible avec la présence de suppresseurs d'écho sur les lignes téléphoniques 4 fils. Pour cette raison, l'Avis G164 livre jaune du CCITT précité prévoit l'existence de dispositif de neutralisation de chaque suppresseur d'écho, interne à ce dernier. Ce dispositif doit être sensible à une tonalité de neutralisation émise par le modem de transmission de données à la fréquence pure, c'est-à-dire sans sauts de phase, de 2100 Hz ± 21 Hz. A l'apparition des annuleurs d'écho encore nommés compensateurs d'écho, le CCITT a réagi en recommandant, dans l'Avis G165 livre jaune précité, la même norme pour l'inhibition des annuleurs d'écho que celle préconisée antérieurement pour les suppresseurs d'écho, à savoir l'émission et la sensibilisation à une tonalité à la fréquence pure de 2100 Hz ± 21 Hz. Or il s'est avéré que la présence en ligne de l'annuleur d'écho améliorait sensiblement la transmission de données à l'alternat (semi-duplex). D'où le problème, dans ce dernier cas, de devoir inhiber les suppresseurs d'écho sans inhiber les annuleurs d'écho, compte tenu du fait que pour la transmission de données en full-duplex, un même signal de neutralisation doit inhiber aussi bien les suppresseurs d'écho que les annuleurs d'écho éventuellement présents sur la partie de la ligne 4 fils. La solution à ce problème, que recommande l'avis G165 livre rouge du CCITT, édition de 1984 AP VIII-102-F actuellement toujours en vigueur, est la reconnaissance sélective par l'annuleur d'écho d'une tonalité de 2100 Hz ± 21 Hz comportant des inversions de phase périodiques qui se produisent toutes les 450 ± 25 ms, qui provoque son inhibition, l'annuleur d'écho ne devant pas réagir, par contre, à la présence en ligne d'une tonalité à la fréquence pure de 2100 Hz.

Ainsi, pour la transmission de signal de parole, en l'absence de tonalité à 2100 Hz, suppresseurs d'écho et annuleurs d'écho fonctionnent ; pour la transmission de données en semi-duplex, le modem d'émission de données semi-duplex émet une tonalité à la fréquence pure de 2100 Hz, ce qui inhibe les suppresseurs d'écho mais n'affecte en rien le fonctionnement des annuleurs d'écho ; et pour la transmission de données en full-duplex, le modem d'émission de données full-duplex émet une tonalité à 2100 Hz avec inversions de phase, ce qui inhibe à la fois les suppresseurs d'écho et les annuleurs d'écho éventuellement présents. Dans le dernier cas chaque modem possède son propre dispositif d'atténuation de l'écho.

L'invention vise précisément à élaborer un appareil, associé à chaque annuleur d'écho, permettant de reconnaître la tonalité précitée de 2100 Hz avec inversions de phase. Plusieurs solutions sont naturellement possibles, parmi lesquelles on connaît celles proposées par la Compagnie AT & T dans sa contribution tardive N° LW de mars 1984 à la recommandation **G165 Section 4 du CCITT.** Dans ce document, trois agencements sont envisagés et évalués :

a - Un procédé de traitement de signal numérique utilisant un autocorrélateur à 6 prises en conjonction avec des filtres numériques et un microprocesseur pour la commande et le séquencement.

b - Une réalisation conventionnelle en analogique qui tire parti du fait que des changements de phase quasi instantanés ne peuvent pas se propager à travers un filtre étroit sans un certain retard.

c - Une approche fondée sur l'utilisation d'une boucle de verrouillage de phase qui incorpore un neutralisateur par tonalité conçu pour satisfaire à l'Avis G164, mais comportant des circuits additionnels qui sont sensibles aux perturbations de phase lorsque les saints de phase de 180° se propagent à travers la boucle.

Le procédé (a) indiqué ci-dessus aurait procuré les meilleurs résultats à ce jour et ces résultats sont décrits dans la proposition précitée.

L'appareil selon la présente invention résout le problème technique posé d'une façon différente des solutions indiquées ci-dessus et, plus généralement, permet la détection et la discrimination de saut(s) de phase dans un signal périodique grâce au fait que l'appareil défini en préambule est remarquable en ce que ledit interrupteur et ledit résonateur sont numériques, que l'appareil comporte en outre un convertisseur de fréquence disposé en amont constitué par un filtre temporel qui transforme le spectre de fréquence du signal d'entrée en un spectre de bande continu d'amplitude proportionnelle à celle dudit signal périodique et dont la bande de fréquence est centrée sur ladite fréquence $f_e$ et comprend ladite fréquence $f_0$, et un phasemètre constitué par des moyens de détection suivis de moyens de discrimination, et que ledit séquenceur comporte un générateur d'horloge à la fréquence $f_s$, chaque séquence de durée $\alpha$ se décomposant en deux phases de fonctionnement qui ont chacune une durée fixe, une première phase d'actionnement dudit convertisseur de fréquence et dudit résonateur de durée $t_1$, ledit interrupteur étant fermé, et une deuxième phase de fonctionnement autonome du résonateur, de durée $t_2$, ledit interrupteur étant ouvert, pendant laquelle ledit phasemètre d'une part effectue la détection grâce auxdits moyens de détection pour déterminer l'instant Tu et le sens de passage à zéro SPASu du signal de sortie s(t) dudit résonateur et d'autre part commence la discrimination dudit saut de phase.

L'idée première de l'invention est, à partir d'une monofréquence qui peut prendre une valeur $f_e$ quelconque dans une certaine plage de fréquences connue à l'entrée de l'appareil, de se ramener à une valeur de fréquence fixe de valeur prédéterminée, $f_0$, ceci étant réalisé en conservant rigoureusement dans le signal ainsi traité le déphasage occasionné par un saut de phase éventuel qui apparaîtrait dans le signal à monofréquence d'entrée. Il devient ainsi possible de mesurer ensuite la phase du signal et d'en déduire les variations éventuelles sur la seule base des sauts de phase du signal d'entrée, c'est-à-dire sans avoir à tenir compte de la valeur de fréquence de ce signal d'entrée.

Un mode de réalisation préféré de l'invention est remarquable en ce que la fonction d'ouverture pendant la durée $t_2$ dudit interrupteur est assurée par multiplication temporelle dans un multiplieur des échantillons du signal d'entrée par des coefficients nuls dudit filtre temporel transmis audit multiplieur à la fréquence $f_s$ après la suite de coefficients non nuls qui caractérisent ledit filtre, et que ledit résonateur est une cellule purement récursive du second ordre à gain infini et centrée sur la fréquence de résonance $f_0$.

La détection de phase peut s'effectuer par tout moyen connu et en particulier par extrapolation en recherchant l'instant du passage à zéro du signal ainsi que son sens de passage à partir de deux échantillons du signal en sortie du résonateur qui sont adjacents et tels que l'un est positif et l'autre négatif.

Cependant, un mode de réalisation particulièrement avantageux de l'invention qui convient exclusive-

EP 0 242 912 B1

ment à un traitement numérique du signal est remarquable en ce que les fréquences $f_0$, $f_S$ et la durée $t_2$ sont choisies telles que : $bf_S = b'f_0$, les nombres b et b' étant des entiers, avec : $t_2 f_S \geqq b'$

et que ledit instant $T_u$ est représenté, en sortie desdits moyens de détection, par le numéro d'ordre chronologique de l'échantillon qui a la plus faible valeur absolue pendant ladite deuxième phase de durée $t_2$. Ainsi, les échantillons recueillis en sortie du résonateur constituent une suite de valeurs qui se présente sous la forme d'un motif périodique de période T' et on fait en sorte de limiter la durée $t_2$ à la valeur T', étant ainsi assuré que, pendant la durée : $t_2 = T'$ le plus petit échantillon aura pu être identifié et son instant d'apparition Tu ainsi que le sens de passage à zéro associé du signal, $SPAS_u$, mémorisés.

Un mode de réalisation avantageux de l'invention convenant à un traitement numérique du signal et compatible avec les deux précédemment indiqués ci-dessus est remarquable en ce que, lors de chaque séquence, lesdits moyens de discrimination effectuent une détermination de phase sur la base d'une double équation aux différences notée CALC entre instants $T_u$ de séquences différentes et des valeurs $SPAS_u$ associées, aptes à faire apparaître des valeurs nulles à chaque période d'échantillonnage en l'absence de saut de phase et au moins une valeur de phase non nulle suite à l'apparition d'un saut de phase, lesdits moyens de discrimination comportant en outre des moyens de levée d'indétermination et de comparaison à un (des) seuil(s) S (S′ et S″) qui permettent de valider ladite valeur de phase lorsque cette dernière est sensiblement égale à $\Delta\phi_e$.

L'application de l'appareil selon l'invention à la reconnaissance d'une tonalité téléphonique à 2100 Hz ± 21 Hz avec inversions de phase périodiques est avantageusement remarquable en ce que la double équation aux différences précitée est :

$$CALC = T_u - 2T_{u-2} + T_{u-4}$$

que les opérations suivantes sont ensuite successivement effectuées par lesdits moyens de discrimination sur la valeur de CALC représentative du saut de phase, ce dernier étant par exemple supposé converti en degrés :

- $SPAS_u \oplus SPAS_{u-4} = 1 \Rightarrow \Delta\phi_e \rightarrow \Delta\phi_e + 180° $ ; sinon $\Delta\phi_e \rightarrow \Delta\phi_e$ où le symbole $\oplus$ désigne l'addition modulo 2.
- $\Delta\phi_e \rightarrow \Delta\phi_e$(modulo $360°$) où $\Delta\phi_e$(mod $360°$) désigne la valeur modulo $360°$ de $\Delta\phi_e$
- $\Delta\phi_e > 180° \Rightarrow \Delta\phi_e \rightarrow 360° - \Delta\phi_e$ ; sinon $\Delta\phi_e \rightarrow \Delta\phi_e$
- $\Delta\phi_e > S \Rightarrow ISPHI_u = 1$ ; sinon : $ISPHI_u = 0$, S étant le seuil de discrimination, inférieur à $180°$, et $ISPHI_u$ étant l'indicateur de variation de phase pour ledit instant $T_u$,

et que le saut de phase recherché est validé lorsque :
$ISPHI_u = 1$ confirme $ISPHI_{u-2} = 1$.

On notera une caractéristique importante de l'invention lorsque l'appareil est conçu pour un traitement numérique de signal : l'appareil caractérisé ci-dessus convient bien pour des échantillons numériques d'entrée à un seul bit, c'est-à-dire des échantillons codés uniquement par leur signe. Dans ce dernier cas, qui simplifie beaucoup le traitement au prix d'une légère diminution de la précision, l'amplitude du signal traité par l'appareil est normalisée à une valeur constante, quelle que soit l'amplitude du signal d'entrée à traiter.

Par ailleurs, il est possible de mettre en oeuvre l'invention soit par des moyens analogiques soit par des moyens numériques. Par échantillonnage et traitement numérique du signal, il est aussi possible d'utiliser soit un calculateur numérique, de préférence un microprocesseur adapté au calcul numérique tel que le TMS 320 de la société Texas Instruments par exemple, soit des circuits logiques microprogrammés. Ces derniers conviennent mieux pour des vitesses de traitement élevées et permettent notamment le traitement d'un signal à modulation par codage d'impulsions (MIC) normalisé à 32 voies.

La description qui suit en regard des dessins annexés, le tout donné à titre d'exemple fera bien comprendre comment l'invention peut être réalisée.

La figure 1 est un schéma synoptique général de l'appareil selon l'invention.

Les figures 2a, 2b, 2c, 2d sont les diagrammes de temps, avec les spectres associés, respectivement de la fonction de transfert du convertisseur de fréquence et de trois signaux traités par l'appareil selon l'invention.

La figure 3 est un schéma synoptique détaillé de la partie de l'appareil qui effectue la détection des sauts de phase.

La figure 4 représente la séquence de fonctionnement de l'appareil.

La figure 5 sert à expliciter un mode de réalisation pour la discrimination de sauts de phase dans le signal d'entrée.

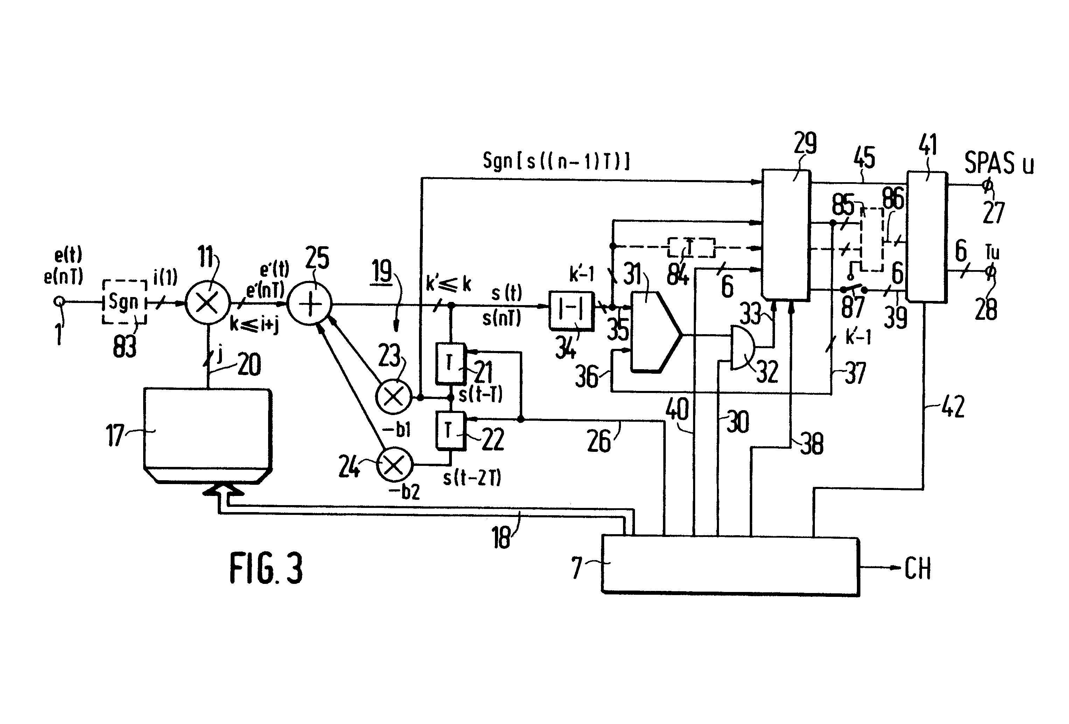

La figure 6 est un schéma synoptique détaillé d'un mode de réalisation préféré de la partie de l'appareil

4

qui, faisant suite à la partie selon la figure 3, effectue la discrimination des sauts de phase.

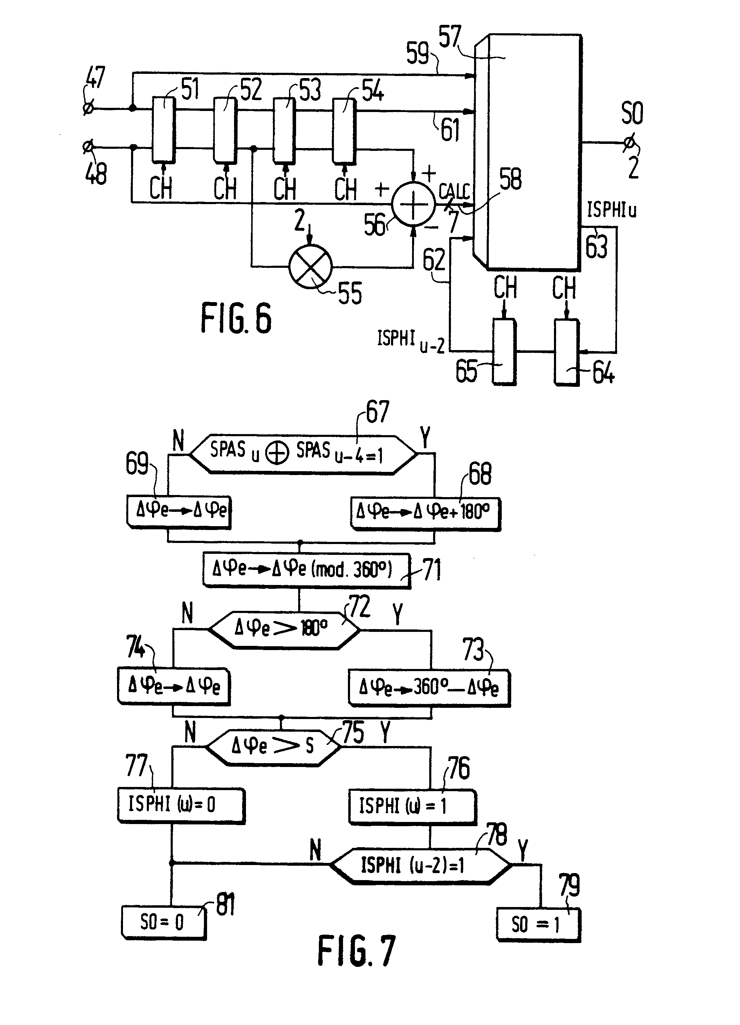

La figure 7 est un diagramme logique servant à expliciter le fonctionnement de l'appareil selon la figure 6.

Sur les figures, les mêmes éléments portent les mêmes références.

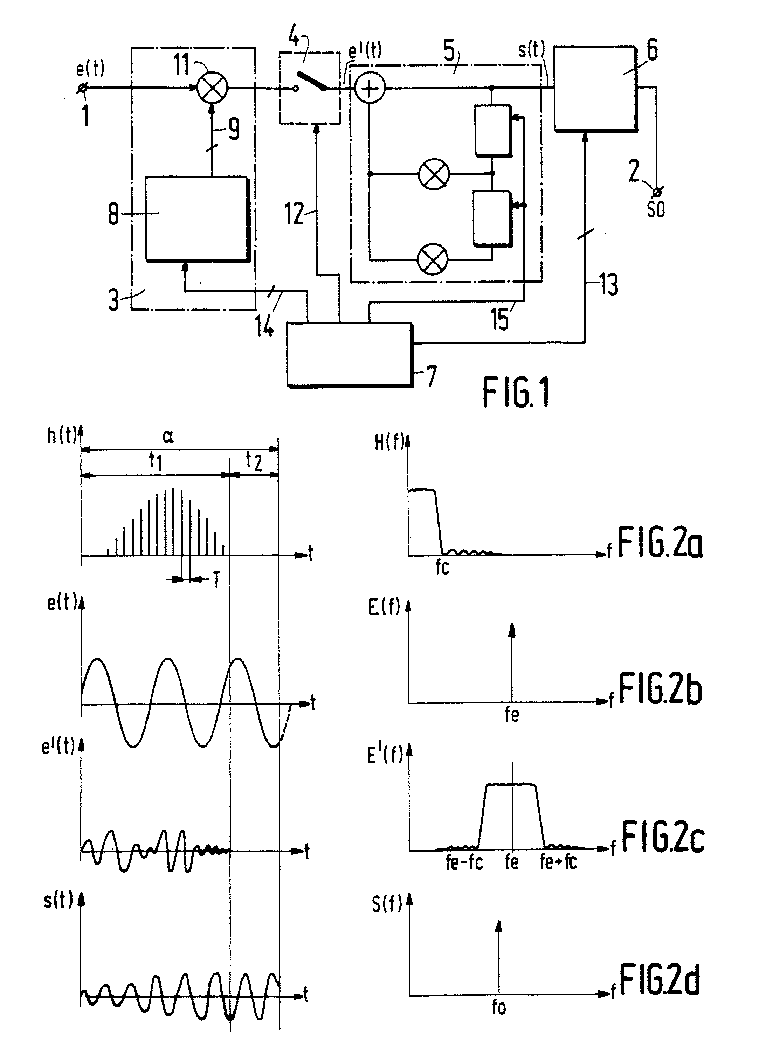

L'appareil décrit ci-dessous à titre d'exemple en référence aux figures 1 à 7 est conçu pour recevoir un signal téléphonique et pour y détecter des inversions de phase intermittentes éventuellement présentes dans un signal de tonalité contenu dans ce signal téléphonique, ce signal de tonalité ayant une fréquence $f_e$ comprise entre 2079 Hz et 2121 Hz. La difficulté de cette détection résulte essentiellement de deux contraintes qui sont la présence de bruit dans le signal d'entrée et la méconnaissance de la valeur exacte précise de la fréquence du signal de tonalité à l'entrée de l'appareil. L'appareil représenté à la figure 1 permet de s'affranchir au mieux de ces deux contraintes ; à cet effet, il comporte en cascade entre une borne d'entrée 1 qui reçoit le signal téléphonique d'entrée e(t) et une borne de sortie 2 qui est le siège d'un signal S0 assimilable à un signal logique, un convertisseur de fréquence 3 représenté dans un cadre en trait mixte, un interrupteur 4 représenté dans un cadre en trait interrompu, un résonateur 5 représenté dans un cadre en trait mixte et un phasemètre 6. Un séquenceur 7 commande les éléments 3 à 6. Le signal d'entrée e(t), limité à la seule tonalité à la fréquence $f_e$, est représenté à la figure 2b, avec son spectre associé E(f). Les autre signaux intéressants du circuit sont le signal e'(t), avec un spectre associé E'(f), représenté à la figure 2c et fourni par le convertisseur de fréquence 3 au résonateur 5 lorsque l'interrupteur 4 est fermé, c'est-à-dire dans la position inverse de celle représentée à la figure 1 et le signal s(t), avec un spectre associé S(f), représenté à la figure 2d et fourni par le résonateur 5 au phasemètre 6. La fonction de transfert H(f) représentée à la figure 2a est équivalente à celle d'un filtre passe-bas dont la fréquence de coupure $f_c$ doit être au moins égale à la moitié de l'excursion de fréquence possible pour la fréquence $f_e$ notée $\Delta f_e$, soit :

$$f_c \geq \Delta f_e/2$$

Dans l'exemple numérique choisi ci-dessus, cette excursion de fréquence $\Delta f_e$ est égale à 42 Hz. Le signal d'entrée e(t) peut être analogique ou se présenter sous la forme d'échantillons numériques e(nT), T étant la période d'échantillonnage. Le convertisseur de fréquence 3 transforme le signal e(t) en le signal e'(t) ; dans le plan des fréquences, la raie unique à la fréquence $f_e$ est transformée en un spectre de bande passante comprise entre $f_e - f_c$ et $f_e + f_c$. L'amplitude de ce spectre de bande continu est sensiblement constante et égale à celle de la sinusoïde d'entrée moyennant que cette sinusoïde n'ait pas subi d'écrêtage. De préférence, le traitement du signal est numérique et dans ces conditions le convertisseur de fréquence 3 est constitué par une mémoire contenant la réponse impulsionnelle échantillonnée h(nT) d'un filtre passe-bas, référencé 8. Les coefficients de ce filtre sont calculés pour obtenir la fonction de transfert H(f) de la figure 2a et sont représentés schématiquement au nombre de 15 par le graphe h(t) à la figure 2a, deux coefficients consécutifs émis par le conducteur multiple 9 étant séparés par la période T d'échantillonnage. Chaque échantillon en provenance de la borne d'entrée 1 est, à chaque période T, multiplié par un coefficient correspondant du filtre 8 dans un multiplieur 11. L'action du filtre 8 dure pendant un temps $t_1$, proportionnel au nombre de coefficients du filtre, pendant lequel l'interrupteur 4 est fermé ; ce nombre de coefficients est d'autant plus élevé qu'on souhaite obtenir, pour la fonction de transfert du filtre 8, une bonne raideur de coupure et un faible taux d'ondulations en bande passante et en bande d'arrêt. Pendant la durée $t_1$, le résonateur 5 est excité et sélectionne, dans la bande passante E'(f) la raie à la fréquence $f_o$, $f_o$ étant sa fréquence de résonance. Les valeurs optimales à choisir pour $f_o$ et $f_c$ sont :

$$f_o = f_{e\,min} + \Delta f_e/2 = f_{e\,max} - \Delta f_e/2 \qquad (1)$$
$$f_c \geq f_{c\,min} = \Delta f_e/2 \qquad (2)$$

ce choix étant dicté par des raisons de symétrie de façon que la valeur de $f_o$ se situe au milieu de l'excursion de fréquence possible pour $f_e$, la valeur de $f_c$ pouvant alors être minimale comme indiqué par l'égalité (2). Il est cependant possible de choisir pour $f_o$ une autre valeur, par exemple pour satisfaire à d'autres critères, pourvu que cette valeur reste comprise dans la plage d'excursion de fréquence de $f_e$ et il est alors nécessaire d'adopter pour $f_c$ une valeur supérieure à $\Delta f_e/2$ de façon que le critère de départ indiqué ci-dessus reste satisfait, à savoir que la raie unique de S(f), figure 2d ait un fréquence appartenant à la bande passante de E'(f), figure 2c.

Le convertisseur de fréquence 3 tel que décrit ci-dessus possède la propriété intéressante de conserver les variations de phase, c'est-à-dire que tout saut de phase qui apparaît sur le signal e(t), figure 2b se répercute exactement sur toute la bande du signal e'(t), figure 2c. Dans ces conditions, quelle que soit la valeur de fréquence du signal de tonalité sur l'entrée 1, tout saut de phase qui apparaît sur ce signal se répercute exactement sur le signal de sortie s(t) du résonateur 5. La durée $t_1$ est au moins égale à la durée de la réponse impulsionnelle du filtre passe-bas contenue dans la mémoire du convertisseur de fréquence 3. Cette durée, pendant laquelle l'interrupteur 4 est fermé, est suivie d'une durée $t_2$ pendant laquelle cet interrupteur est ouvert, le résonateur 5 étant alors bouclé et oscillant sur lui-même, son entrée e'(t) étant nulle, et fournissant un signal s(t) purement sinusoïdal, dont la fréquence demeure constante et égale à $f_o$ et dont l'amplitude ne peut varier que faiblement, cette variation étant d'ailleurs sans importance pour l'invention. La durée $t_2$ est choisie telle que la mesure de phase puisse être effectuée par le phasemètre 6 pour le cycle de fonctionnement considéré dont la durée $\alpha$ est égale à la somme des durées $t_1$ et $t_2$. Dans la version numérique de l'appareil selon la figure 1, l'interrupteur 4 peut être physiquement omis moyennant de conserver sa fonction, par exemple en émettant, pendant la durée $t_2$, le nombre adéquat (égal à $t_2/T$) de valeurs nulles sur le conducteur multiple 9 à la suite des coefficients non nuls du filtre 8. Pendant la fin de la durée $t_2$ et tout ou partie de la durée $t_1$ du cycle suivant, le phasemètre 6 compare la phase mesurée par tout moyen connu en analogique ou en numérique aux phases mesurées lors des cycles précédents et en déduit s'il y a eu ou non saut de phase lors du ou des cycles juste précédents. Lorsqu'un saut de phase est ainsi détecté, il est comparé à un (des) seuil(s), dans le phasemètre 6, ce qui permet de faire la discrimination entre un saut de phase de valeur $\Delta\phi_e$ prédéterminée attendu sur le signal d'entrée et d'autres sauts de phase parasites de valeurs différentes éventuels apparaissant dans ce signal. Un saut de phase de valeur $\Delta\phi_e$ détecté se traduit par un changement d'état de type monostable ou bistable sur le signal de sortie S0 sur la borne de sortie 2 de l'appareil. Dans la version numérique de l'appareil le signal S0 est purement logique et passe par exemple de l'état 0 en l'absence de saut de phase égal à $\Delta\phi_e$, à l'état 1 en présence d'un tel saut de phase pendant une durée qui peut être égale à $\alpha$. Les séquences de fonctionnement décrites ci-dessus sont obtenues au moyen du séquenceur 7 qui commande dans la version analogique de l'appareil au moins la fermeture et l'ouverture de l'interrupteur 4 par un conducteur 12 et le séquencement du phasemètre 6 tel qu'indiqué ci-dessus par un conducteur multiple (barré par un trait oblique) 13. Dans la version numérique de l'appareil, le conducteur 12 peut être supprimé, le filtre 8 recevant du séquenceur 7 par un conducteur multiple 14, un adressage adéquat de ses coefficients et des coefficients nuls qui leur font suite et le résonateur 5 est relié par un conducteur 15 de remise à zéro de ses registres au séquenceur 7, le phasemètre 6 étant toujours relié à ce dernier par le conducteur multiple 13. On notera, sur la figure 1, que le résonateur a été représenté dans une version numérique sous la forme d'une cellule purement récursive du second ordre d'ailleurs connue en soi qui est décrite plus en détail ci-dessous en référence à la figure 3.

La figure 3 représente un mode de réalisation numérique préféré de l'appareil limité à la partie de détection de phase. On suppose que le signal d'entrée e(t) appliqué sur la borne 1 se présente sous la forme d'échantillons codés en MIC sur i bits, par exemple en 8 bits. Le principe de détection de saut de phase de la tonalité de neutralisationn est basé sur l'utilisation d'un filtre temporel excitant un résonateur parfait centré sur 2100 Hz, comme décrit ci-dessus de façon plus générale en référence aux figures 1 et 2. Le filtrage temporel consiste à réaliser à chaque période d'échantillonnage T la multiplication de l'échantillon du signal d'entrée avec un coefficient prédéterminé. Ainsi, les échantillons du signal d'entrée sont, dans le cas particulier de réalisation choisi, multipliés par la réponse impulsionnelle d'un filtre RIF transversal passe-bas par exemple à 128 coefficients non nuls codés sur j bits. On notera qu'à cette multiplication dans le temps correspond, par dualité, une convolution en fréquence. Ce filtre est physiquement réalisé, outre le multiplieur 11, sous la forme d'une mémoire ROM 17 microprogrammée, dotée d'un adressage cyclique de durée $\alpha$ en provenance du séquenceur 7 par un bus d'adresses 18. Ce nombre élevé de coefficients permet d'obtenir une réponse fréquentielle possédant un bon affaiblissement en bande d'arrêt et une bande de transition très réduite, compte tenu de la fréquence d'échantillonnage à 8 kHz. Outre les 127 coefficients non nuls émis sur j bits sur un conducteur multiple 20 relié à une deuxième entrée du multiplieur 11 pendant un temps $t_1$ de début de cycle d'addressage, la mémoire ROM 17 comporte un nombre prédéterminé de coefficients nuls émis pendant un temps $t_2$ de fin de cycle d'adressage. Dans la mémoire ROM 17, on peut utiliser, pour la mémorisation des coefficients un code linéaire, par exemple à 12 bits ; on peut aussi utiliser un code compressé par exemple à trois bits de segments, trois bits de mantisse et un bit de signe. La valeur des coefficients peut être obtenue de façon connue, au moyen d'un programme de synthèse de filtre non récursif implanté dans un calculateur de façon à obtenir le gabarit de filtre H(f) défini en référence à la figure 2a. Le principal avantage de ce filtre est, tout en déformant (décalant) le spectre du signal d'entrée, de reproduire les variations de phase du signal d'entrée sur toutes les composantes spectrales du signal de sortie, comme déjà indiqué ci-dessus. De plus, couplé à la cellule résonante 19 qui lui fait suite et qui se comporte comme un filtre passe-bande très sélectif centré sur la fréquence $f_o = \overline{2100}$ Hz, ce filtrage procure une bonne protection contre le bruit parasite. En sortie de la cellule résonante, une sinusoïde s(t) à 2100 Hz apparaît. Son niveau et sa phase sont fonction de ceux du signal d'entrée e(t) comme expliqué ci-dessous. Ce filtrage numérique est effectué sur le signal d'entrée avec une périodicité $\alpha$ et pendant la durée $t_1$ correspondant à la durée de la réponse impulsionnelle du filtre RIF, soit, si l'on travaille sur un train MIC 32 canaux à 2048 kbits/s transportant un ensemble de signaux numérisés admettant une fréquence d'échantillonnage $f_S$ de 8 kHz, soit un échantillon toutes les 125 $\mu$s :

$$t_1 = 127 \times 125 = 15875 \ \mu s$$

c'est-à-dire environ 16 ms.

La cellule résonante 19 est de préférence une cellule purement récursive du second ordre, à gain infini et centrée sur $f_o$ = 2100 Hz. Cette cellule, qui est décrite dans le livre de M. BELLANGER intitulé "Traitement numérique du Signal", édité chez MASSON en 1981, pages 178 à 197, a comme équation :

$$s(nT) = e'(nT) - b_1 s((n-1)T) - b_2 s((n-2)T) \qquad (3)$$

La fonction de transfert en Z de ce système s'écrit :

$$H(Z) = \frac{Z^2}{Z^2 + b_1 Z + b_2} = \frac{1}{1 + Z^{-1} + b_2 Z^{-2}} \qquad (4)$$

avec $Z = e^{j2\pi fT}$.

Cette fonction possède un zéro double à l'origine et deux pôles conjugués situés sur le cercle unité dans le plan complexe (cas particulier du résonateur), ce qui entraîne pour $b_1$ et $b_2$ les valeurs suivantes :

$$b_1 = -2\cos 2\pi \left(\frac{f_0}{f_S}\right) = -2\cos 2\pi \left(\frac{2100}{8000}\right) = -0,15692 \qquad (5)$$

$$b_2 = 1. \qquad (6)$$

La cellule 19 est réalisée de façon classique, comme représenté sur les figures 1 et 3 par des circuits qui effectuent directement les opérations représentées dans l'expression de la fonction de transfert (4). Les termes $Z^{-1}$ et $Z^{-2}$ correspondent à un retard T et 2T et sont réalisés par une mise en mémoire dans des registres 21 et 22. Les nombres de sortie s(nT) sont retardés une fois puis deux fois, multipliés par les coefficients - $b_1$ et - $b_2$ dans les multiplieurs 23 et 24 avant d'être ajoutés dans l'additionneur 25 aux nombres d'entrée e'(nT). On notera que les registres 21 et 22 sont remis à zéro au moyen d'un conducteur 26 relié au séquenceur 7 au début de chaque fenêtre de calcul, c'est-à-dire au début de chaque cycle de durée $\alpha$. Pendant l'intervalle de temps $\alpha$ - $t_1$, c'est-à-dire pendant la durée $t_2$, l'entrée e'(t) de la cellule 19 est nulle et la cellule oscille librement sur elle-même. C'est pendant cette durée $t_2$ qu'est effectuée la mesure de phase du signal s(t) par la partie du dispositif de la figure 3 située à droite de la cellule 19. La cellule résonante est donc excitée périodiquement pendant une durée $t_1$ qui est celle de la réponse impulsionnelle du filtre d'entrée 11, 17, 20. A l'issue de cette durée $t_1$, l'entrée e'(t) de la cellule est à zéro, sa sortie s(t) se stabilise en amplitude et l'on consacre l'intervalle $\alpha$ - $t_1$ = $t_2$ à la mesure de la phase pour le cycle de durée $\alpha$ considéré à des fins de comparaison de phase entre cycles successifs pour détecter des variations de phase d'un cycle à l'autre. Le signal issu de la multiplication dans chaque intervalle de temps [$p\alpha$, $p\alpha$ + $t_1$] (p entier) est comme suit :

Soit h(t) la réponse impulsionnelle du filtre d'entrée. On considère un signal monofréquence de fréquence $f_e$ présent à l'entrée du circuit ; il vient :

$$e'(t) = e(t).h(t) \qquad (7)$$
$$e'(t) = \sin(2\pi f_e t + \phi_e).h(t) \text{ avec } t \ [p\alpha, p\alpha + t_1]$$

La réponse en fréquence d'un filtre transversal s'exprime par :

$$H(f) = R(f) \ e^{-j\phi(f)}$$

La transformée de Fourier du signal après filtrage est donc :

$$\xi'(f) = F[e'(t)] = \int_{-\infty}^{+\infty} e'(t)\, e^{-2\pi jft}dt$$

$$= \int_{p\alpha}^{p\alpha+t_1} e(t).h(t-p\alpha)\, e^{-2\pi jft}dt$$

$$= \int_{p\alpha}^{p\alpha+t_1} e^{2\pi f_e jt+j\varphi_e}.h(t-p\alpha)\, e^{-2\pi jft}dt$$

$$\xi'(f) = e^{-2\pi j(f-f_e)p\alpha+j\varphi_e}.\int_{0}^{t_1} h(t).e^{-2\pi j(f-f_e)t}dt$$

$$= e^{-2\pi j(f-f_e)p\alpha+j\varphi_e}.H(f-f_e)$$

La cellule résonante est en fait excitée par la composante spectrale $f_o$ soit :

$$\xi'(f_0) = e^{-2\pi j(f_0-f_e)p\alpha+j\varphi_e}.H(f_0-f_e) \qquad (8)$$

La sinusoïde s(t) en sortie de la cellule est donc calée en phase sur cette composante. La phase $\phi_s(p)$ de la tonalité $f_o$ = 2100 Hz en sortie est donc :

$$\phi_s(p) = \phi_e(p) - 2\pi(f_o-f_e)p\alpha + \theta(f_o) \qquad (9)$$

avec :

$\phi_e(p)$ : phase du signal d'entrée.

Entre deux intervalles de mesure, $\theta(f_o)$ est invariant et la variation de phase en sortie entre deux filtrages successifs est alors :

$$\Delta\phi = \phi_e(p) - \phi_e(p-1) - 2\pi(f_o-f_e)\alpha \qquad (10)$$

La quantité $2\pi(f_o-f_e)\alpha$ est une constante $K_1$ dépendant de la fréquence $f_e$ reçue et qu'il faudra éliminer lors de la prise en compte de la mesure. On voit donc apparaître que, lors d'un saut de phase sur le signal d'entrée, la tonalité à 2100 Hz du signal de sortie sera affectée de ce même saut de phase, soit :

$$\Delta\phi_s = \Delta\phi_e + K_1 \qquad (11)$$

Pour des valeurs successives de $\Delta\phi_s$ la variation de $f_e$ est négligeable, ce qui justifie le fait de considérer la quantité $2\pi(f_o-f_e)\alpha$ comme une constante $K_1$, au moins pour plusieurs valeurs $\Delta\phi_s$ voisines.

La partie droite du dispositif de la figure 3 sert à mesurer la phase $\phi_s(p)$ selon la formule (9). De préférence, on effectue cette mesure en repérant la plus petite valeur prise par le signal de sortie pendant l'intervalle de temps $t_2$ et en retenant le temps $T_u$ d'identification de ce plus petit échantillon qui peut être assimilé à un instant de passage à zéro de la sinusoïde à 2100 Hz. Pour lever l'indétermination de phase de 180° il faut aussi relever le sens de passage à zéro au temps $T_u$. En sortie du dispositif de la figure 3 on obtient sur une première borne de sortie 27 un signal logique $SPAS_u$ représentatif du sens de passage à zéro de la sinusoïde, valant par exemple 0 pour une pente positive et 1 pour une pente négative, et sur une deuxième borne de sortie multiple 28 un signal $T_u$ qui est par exemple pris en compte par le numéro d'ordre u de l'échantillon d'amplitude minimale à compter du début de la durée $t_2$. Pour l'obtention des signaux $SPAS_u$ et $T_u$ on utilise un registre 29 qui reçoit le signal s(t) et est commandé par un conducteur 30 en provenance du séquenceur 7 par une horloge de période T validée pendant le temps $t_2$ de recherche du passage à zéro de s(t) et pendant les états 1 de la sortie d'un circuit comparateur 31. Cette validation est réalisée par un circuit porte logique ET 32 dont les deux entrées sont reliées à la sortie du comparateur 31 et au séquenceur 7 respectivement. La sortie du circuit ET 32 est reliée par un conducteur 33 au registre 29. Les entrées multiples du circuit comparateur 31 sont d'une part s(nT) sur une première entrée multiple 35 après redressement à travers un circuit redresseur 34, et s((n-1)T) obtenu par rebouclage sur une deuxième entrée multiple 36 du comparateur d'une sortie multiple sur un conducteur 37, le signal étant retardé d'une période d'horloge en 29. Par ailleurs, le numéro d'ordre de chaque échantillon est tramsmis au registre 29, par exemple sur 6 bits, par un conducteur 40 relié au séquenceur 7. Un autre conducteur 38, qui relie le séquenceur 7 au registre 29 sert à mettre à la valeur 1 les emplacements mémoire de ce dernier, c'est-à-dire à imposer en 29, au début de $t_2$, la valeur absolue maximale d'échantillon mémorisé. A la première période du temps $t_2$, cette valeur maximale est transmise par le conducteur 37 au comparateur 31. Lorsque le signal sur l'entrée 36 a une amplitude inférieure à celle du signal sur l'entrée 35, le circuit comparateur 31 et en conséquence le circuit ET 32 fournissent à leur sortie un signal logique 0. Lorsque l'inverse se produit, les sorties des éléments 31 et 32 passent à l'état logique 1, ce qui commande, en 29, la mémorisation du signal s(nT) redressé. La comparaison entre échantillons adjacents se poursuit ainsi à chaque période d'échantillonnage, les amplitudes d'échantillons mémorisées successivement en 29 devenant plus faibles à chaque changement. En concomitance avec l'amplitude de tel ou tel échantillon est enregistré au moyen du conducteur 40 le numéro d'ordre de l'échantillon correspondant. Au bout du temps $t_2$ le registre 29 contient le numéro d'ordre u du plus petit échantillon de s(t) pendant $t_2$. A la fin du temps $t_2$, ce numéro d'ordre u est transmis, par le conducteur multiple 39, par exemple sur 6 bits à un registre tampon 41 de mémorisation de l'instant de passage à zéro $T_u$ que l'on vient de calculer. Le registre 41 est remis à jour à chaque période de cycle de durée $\alpha$ à partir d'un conducteur 42 relié au séquenceur 7. Le signal $SPAS_u$ est obtenu quant à lui directement à partir du signal s((n-1)T) qui est fourni au registre 29 et mémorisé dans ce dernier en même temps que l'amplitude de l'échantillon correspondant et son numéro d'ordre. Le bit de signe ayant la valeur 1 pour : > 0, et 0 pour : < 0, on obtient bien ainsi la valeur logique recherchée pour $SPAS_u$, à savoir que pour deux échantillons successifs dont l'amplitude va en diminuant en valeur absolue, aux deux cas de figure dans lesquels le premier échantillon est négatif et le suivant soit négatif soit positif correspond la même pente positive de la sinusoïde, ce qui se traduit par : $SPAS_u$ = 0 ; de même, avec le même critère sur l'amplitude, aux deux cas de figure dans lesquels le premier échantillon est positif et le suivant soit positif soit négatif, correspond la même pente négative de la sinusoïde, ce qui se traduit par : $SPAS_u$ = 1. La valeur particulière de $SPAS_u$ qui correspond à l'échantillon de plus petite amplitude pendant le temps $t_2$ est transmise du registre 29 au registre tampon 41 par un conducteur 45, à la fin de la période $\alpha$. La mesure de $T_u$ et le choix de la durée $t_2$ peuvent être optimisés dans le double but de pouvoir choisir une durée $t_2$ courte afin d'augmenter la fréquence des mesures de phase, par diminution de la période $\alpha$, et d'avoir un nombre d'échantillons d'amplitudes toutes différentes, pendant la durée $t_2$, pour une bonne précision de mesure du temps de passage à zéro de la sinusoïde, compatible avec la précision liée au bruit sur le signal d'entrée, notamment, ce qui permet de réduire l'écart entre les seuils pour la discrimination du saut de phase recherché ces seuils intervenant, dans le traitement du signal, an aval des bornes 27 et 28.

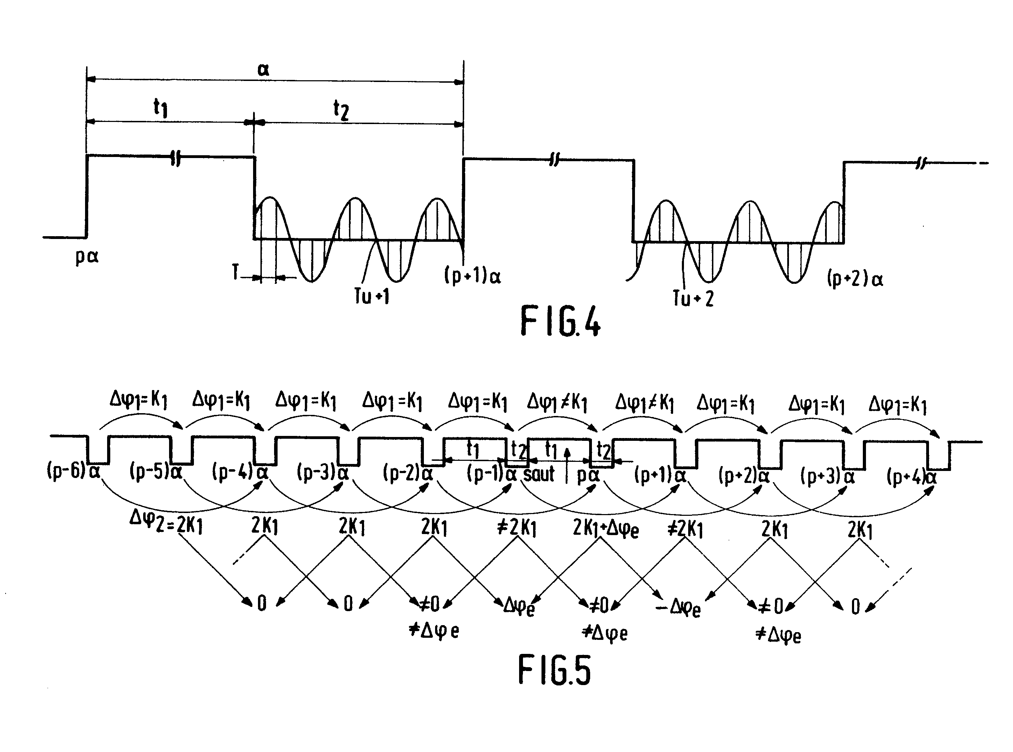

On peut obtenir un nombre d'échantillons tous différents en amplitude avec une répétition cyclique au bout d'un certain nombre de sinusoïdes en choisissant les fréquences $f_o$ et $f_s$ pour qu'elles présentent entre elles certaines propriétés arithmétiques. Le critère choisi est par exemple qu'après un nombre d'échantillons successifs, de l'ordre de quelques dizaines, se présente à nouveau une suite identique d'échantillons. A cet égard les fréquences : $f_o$ = 2100 Hz et $f_s$ = 8000 Hz sont telles que les suites d'échantillons représentatifs de la sinusoïde s(nT) se répètent à l'identique selon le même motif de 80 échantillons tous différents en amplitude, deux échantillons successifs étant espacés d'un angle de 94,5° par rapport à la sinusoïde s(nT). Pour des amplitudes d'échantillons prises en valeur absolue, une suite de 40 échantillons suffit, ce qui justifie le codage sur 6 bits du numéro d'ordre d'échantillon sur les conducteurs multiples 40 et 39. Au lieu de 40 échantillons on pourraît, tout en conservant la fréquence : $f_s$ = 8 kHz, choisir une suite allant jusqu'à 50 échantillons, tout en maintenant la fréquence $f_o$ dans la plage qui lui est allouée comme décrit ci-dessus, en référence à la figure 2, ceci afin d'améliorer la précision de mesure du passage à zéro de la sinusoïde. On préfère cependant, pour des raisons de symétrie, conserver la valeur centrale : $f_o$ = 2100 Hz, ce qui conduit, pour la valeur de $T_u$ à une précision correspondante sur la phase égale à ± 2,25°. La mise en évidence de suites répétitives d'échantillons est illustrée à la figure 4 où l'on a choisi à titre d'exemple le rapport : $f_s/f_o$ = 20/3, soit un espacement angulaire entre échantillons de 54°, d'où l'on déduit une suite répétitive de 20 échantillons, soit 10 échantillons pris en valeur absolue en association avec l'information complémentaire du sens de passage à zéro de la sinusoïde. La durée $t_2$ peut être limitée à la durée de ces 10 échantillons, respectivement de ces 40 à 50 échantillons dans l'exemple numérique précédent.

De façon générale il est avantageux de choisir les fréquences $f_o$, $f_s$ et la durée $t_2$ telles que :

$$bf_s = b'f_o$$

les nombres b et b' étant des entiers, avec :

$$t_2 f_s \geq b'.$$

Sur la figure 4, la durée de $t_2$ a été choisie inutilement longue, d'une durée de l'ordre de 17 échantillons. Pendant la durée de cycle $(p+1)\alpha$, $T_u$ (noté $T_{u+1}$) est représenté par un numéro d'ordre d'échantillon de 10, soit une phase de :
$$10 \times 54 = 540°.$$
Pendant la durée du cycle $(p+2)\alpha$, $T_u(T_{u+2})$ est représenté par un numéro d'ordre d'échantillon de 5, soit une phase de :
$$5 \times 54 = 270°.$$

On notera que pour simplifier les notations, on a reporté sur l'indice u les variations de l'indice p, l'indice u ne représentant donc plus, dans la suite du texte, le numéro d'ordre de l'échantillon pendant la durée $t_2$.

La différence de phase : $\Delta\phi_1 = 540 - 270 = 270°$, traduit une évolution de la phase calculée révélant éventuellement un saut de phase produit sur le signal d'entrée pendant la durée $t_2$ du cycle $(p+1)\alpha$ ou la durée $t_1$ du cycle $(p+2)\alpha$. Si le saut de phase se produit pendant une durée $t_2$ pendant laquelle la cellule résonante 19 n'est pas excitée, la mesure de phase du cycle suivant est correcte. Par contre, si ce saut de phase se produit pendant une durée $t_1$, l'excitation de la cellule est perturbée et la mesure de phase qui suit, faussée. Or, en fonction des contraintes définies ci-dessus, la durée $t_1$ est généralement supérieure à la durée $t_2$, ce qui donne une probabilité plus grande d'apparition de saut de phase pendant $t_1$ que pendant $t_2$. Ceci pourrait apparaître comme un défaut intrinsèque de l'invention s'il n'était facile d'y remédier comme décrit ci-dessous en référence aux figures 5 à 7. Il suffit en effet d'attendre la mesure suivante pour avoir par différence et de façon correcte la valeur du saut de phase.

Afin de s'affranchir à la fois de la composante de phase : $K_1 = 2\pi(f_o-f_e)\alpha$ due à la valeur de fréquence $f_e$, généralement différente de $f_o$, du signal de tonalité reçu et de la mauvaise mesure possible liée à l'instant du saut de phase, on choisit de préférence, pour mesurer l'évolution de la phase du signal, l'expression :

$$CALC = T_u - T_{u-2} - (T_{u-2} - T_{u-4})$$
$$CALC = T_u - 2T_{u-2} + T_{u-4} \qquad (12)$$

étant supposé qu'un seul saut de phase peut se produire pendant la durée $4\alpha$.

Le déphasage constant à considérer, qui d'ailleurs s'annule en vertu de la relation (12) est alors :

$$K_2 = 2\pi(f_o-f_e).2\alpha = 2K_1.$$

On suppose que les valeurs choisies pour $\alpha$, $t_1$ et $t_2$ sont respectivement : $\alpha = 24$ ms ; $t_1 = 16$ ms ; $t_2 = 8$ ms.

Le choix de la relation (12) se justifie de la façon suivante : la détermination des variations de phase est basée sur la recherche des passages à zéro du signal à la fréquence $f_o = 2100$ Hz ou du moins sur la recherche de la plus petite valeur du signal sur une durée de mesure : $t_2 = 8$ ms et la mémorisation de l'instant $T_u$ correspondant par rapport au début de la mesure. Le déphasage entre deux mesures successives d'ordre p-1 et p est :

$$\Delta\phi_1 = 2\pi f_o(T_u - T_{u-1}) + K \qquad (13)$$

ce qui est une autre façon d'exprimer la variation de phase $\Delta\phi$ dont une expression est déjà donnée par la formule (10) ci-dessus. Lorsque le passage à zéro ne se fait pas dans le même sens pour les cycles p-1 et p, $\Delta\phi$ doit alors être augmenté de 180 degrés.

Comme indiqué ci-dessus si l'on attend la mesure suivante (ou cycle p) pour effectuer la comparaison de phase pour s'affranchir d'une perturbation possible du résonateur par le saut de phase, la variation de phase à considérer sur une période $2\alpha$ s'exprime aux rangs p+1 et p-1 par :

$$\Delta\phi_2(p) = 2\pi f_o(T_{u+1} - T_{u-1}) + C \qquad (14)$$

- l'indice 2 affecté à $\Delta\phi$ indiquant que la variation de phase est mesurée de $2\alpha$ en $2\alpha$.

- C étant une constante dépendant de la fréquence reçue $f_e$.

Pour s'affranchir de la constante C, on fait encore, à chaque période $\alpha$ la différence entre deux valeurs de $\Delta\phi$ séparées de $2\alpha$, ce qui met en évidence la variation de phase $\Delta\phi_e$ correctement mesurée :

$$\Delta\phi_e(p) = \Delta\phi_2(p+1) - \Delta\phi_2(p-1) \qquad (15)$$

Par raison de symétrie, il vient aussi, deux séquences plus tard :

$$\Delta\phi_e(p+2) = \Delta\phi_2(p+3) - \Delta\phi_2(p+1) \qquad (16)$$

ce qui permet une confirmation de la mesure $\Delta\phi_e(p)$. A la fin de chaque fenêtre temporelle $\alpha = 24$ ms, on doit donc calculer :

$$\Delta\phi_e(p) = \Delta\phi_2(p+1) - \Delta\phi_2(p-1)$$
$$\Delta\phi_e(p) = \phi_s(p+1) - 2\phi_s(p-1) + \phi_s(p-3) \qquad (17)$$

La quantité représentative de $\Delta\phi_e(p)$ est bien celle qui est donnée par la relation (12) ci-dessus.

A partir de la valeur de CALC on peut déduire s'il y a eu ou non une variation de phase conforme aux spécifications, par exemple une inversion de phase dans le cas de la recommandation G165 du CCITT.

La figure 5 illustre ce qui est décrit ci-dessus en liaison avec les expressions (12) à (17), dans le cas où un saut de phase s'est produit pendant la durée $t_1$ de la période $p\alpha$. En l'absence de saut de phase, la valeur de $\Delta\phi_1$ est égale à une constant $K_1$. Les valeurs correctes pour $\Delta\phi_e$ sont obtenues, au signe près, aux rangs $p+1$ et $p+3$, avec un espacement de $2\alpha$. De façon non représentée, si le saut de phase se produit pendant le temps $t_2$ de la période $(p-1)\alpha$, les valeurs correctes pour $\Delta\phi_e$ sont obtenues au signe près, aux rangs $p$, $p+1$, $p+2$ et $p+3$ ; il y a, dans ce dernier cas, double confirmation.

La figure 6 représente un circuit dont les bornes d'entrée 47 et 48 sont à raccorder aux bornes 27 et 28 de la figure 3 respectivement, pour la discrimination du saut de phase $\Delta\phi_e$ comme décrit ci-dessus. Ce circuit comporte 4 registres à 7 bits en série, 51 à 54 chargés à chaque période $\alpha = 24$ ms par un signal CH en provenance du séquenceur 7, figure 3. L'expression CALC de la relation (12) est obtenue, à partir de ces registres, au moyen d'un multiplieur par deux 55 et d'un additionneur-soustracteur 56, par exemple comme représenté sur la figure 6. Une mémoire programme de discrimination de saut de phase 57 reçoit, outre le signal CALC sur une entrée multiple 58 le signal $SPAS_u$ sur une entrée 59, le signal $SPAS_{u-4}$ retardé de $4\alpha$ à travers les registres 54 sur une entrée 61 et un signal $ISPHI_{u-2}$ sur une entrée 62. La mémoire 57 du type PROM fonctionne en logique microprogrammée ; elle est programmée de façon telle que les entrées 58, 59 et 61 constituent un adressage de ses emplacements mémoire qui contiennent soit un 0 soit un 1 et que soit fourni sur une sortie 63 un signal logique ISPHI, indicateur de variation de phase, obtenu conformément au diagramme logique de la figure 7. La valeur ISPHI = 1 pendant une durée égale à $\alpha$ sur la sortie 63 traduit l'apparition d'un saut de phase de valeur prédéterminée $\Delta\phi_e$ à l'entrée 1 de l'appareil. La valeur ISPHI = 0 signifie à l'inverse l'absence d'un saut de phase qui serait très voisin de $\Delta\phi_e$. La sortie 63 est reliée à l'entrée 62 par l'intermédiaire de deux registres à 1 bit 64 et 65, par exemple des bascules D, chargés à chaque période $\alpha = 24$ ms. De façon interne à la mémoire PROM 57, non représentée, une fonction ET logique est effectuée, à chaque séquence $\alpha$, entre $ISPHI_u$ et $ISPHI_{u-2}$, ce qui constitue la confirmation au rang u d'une détection de saut de phase $\Delta\phi_e$ antérieure de $2\alpha$ au rang u-2. Le résultat de cette fonction ET est transmis à la sortie 2 de l'appareil et constitue le signal de sortie SO qui vaut 1 lorsqu'un saut de phase $\Delta\phi_e$ s'est produit à l'entrée et 0 dans le cas contraire.

La programmation de la mémoire 57 est obtenue de préférence par programmation préalable d'un mini ordinateur ou d'un microcalculateur, le programme utilisé étant établi à partir d'un diagramme logique tel que décrit ci-dessous en référence à la figure 7, de façon à définir une application entre chaque nombre binaire présent sur les entrées 58, 59 et 61 et le contenu, 1 ou 0, défini par programmation, inscrit dans l'emplacement mémoire qu'adresse ce nombre.

A la figure 7 on teste d'abord, au bloc 67, l'indétermination liée au sens de passage à zéro du signal s-(t) aux rangs u et u-4, le sens de passage au rang u-2 n'intervenant pas au rang u-2 à cause de la présence du coefficient 2 dans la relation (12). Le test consiste en une fonction logique OU exclusif (addition modulo 2) : $SPAS_u \oplus SPAS_{u-4} = 1$ (Y) traduit des sens de passage opposés et l'on doit alors, au bloc 68, rajouter $180°$ à la valeur de phase mesurée, ce qui peut s'exprimer par : $\Delta\phi_e \rightarrow \Delta\phi_e + 180°$. Dans le cas contraire (N), $SPAS_u \oplus SPAS_{u-4} = 0$ et la valeur de phase mesurée reste inchangée soit, au bloc 69 : $\Delta\phi_e \rightarrow \Delta\phi_e$. L'opération suivante consiste à limiter à $360°$ la valeur de phase en recherchant sa valeur comprise entre $0°$ et $360°$, modulo $360°$, ce qu'on écrit, au bloc 71 :

$\Delta\phi_e \rightarrow \Delta\phi_e$(mod 360°). Dans le cas particulier d'un saut de phase de 180° il suffit de se limiter à une valeur de $\Delta\phi_e$ inférieure à 180°, ce qui permet ensuite de n'avoir à utiliser qu'un seuil de comparaison (de décison) S. Ce dernier test est effectué au bloc 72. Pour $\Delta\phi_e > 180°$, on effectue, au bloc 73 : $\Delta\phi_e \rightarrow 360°$ - $\Delta\phi_e$ ; dans le cas contraire on conserve la valeur de la phase, au bloc 74 : $\Delta\phi_e \rightarrow \Delta\phi_e$. La comparaison au seuil S est effectuée au bloc suivant, 75, $\Delta\phi_e$ devant être compris entre S et 180° pour être pris en compte comme inversion de phase détectée sur le signal d'entrée e(t). Pour $\Delta\phi_e > S$, il vient, au bloc 75 : ISPHI(u) = 1 ; sinon, au bloc 77, ISPHI(u) = 0. La fin du diagramme, soit le bloc de test 78 : ISPHI(u-2) = 1 et les blocs 79 : SO = 1 et 81 : SO = 0 a déjà été expliquée ci-dessus et ne fait pas partie du programme d'inscription de la PROM 57. La sortie 2 qui porte le signal SO est à relier à un étage d'entrée d'inhibition d'un annuleur d'écho, constitué par un circuit-porte ET qui reçoit sur son autre entrée le signal binaire engendré par un dispositif classique de détection de tonalité conforme à la recommandation G164 du CCITT. Dans l'application numérique pour la téléphonie, le choix du seuil S est fonction de deux facteurs principaux qui sont la discrimination par rapport à des sauts de phase parasites de resynchronisation associés à la perte ou au doublement d'un bit d'information (sauts de trame en MIC), ces sauts pouvant atteindre 110°, et la norme préconisée par le CCITT qui est, pour une inversion de phase : 180° ± 25°. De préférence, on choisit le seuil S au milieu de la plage 110° à 155° soit à 132°. La discrimination de $\Delta\phi_e$ = 180° est alors correcte pourvu que le bruit ne provoque pas une variation de phase supérieure à 155 - 132 = 23°, ce qui est vrai jusqu'à un rapport signal à bruit aussi faible que 0 dB. En l'absence de bruit, la variation de phase n'excède pas 10°, ce qui ramènerait le seuil à 145°.

On notera que l'expression exacte de la phase exprimée par exemple en degrés par le nombre CALC sur l'entrée multiple 58 est :

$$\Delta\varphi_e = \frac{f_0}{f_S} \cdot 360 \cdot \text{CALC} \qquad (18)$$

$$\frac{f_0 \cdot 360}{f_S}$$

étant une constante qui dans l'exemple numérique choisi ci-dessus vaut 94,5°, soit l'espacement angulaire entre deux échantillons sur la sinusoïde s(t).

Dans le mode de réalisation décrit ci-dessus dont la structure est représentée aux figures 3 et 6, il est possible de limiter l'échantillonnage du signal d'entrée à un seul bit, c'est-à-dire au bit de signe, ce qui est représenté par le bloc en trait interrompu 83 (Sgn) sur la figure 3. Avec ce mode de réalisation simplifié qui normalise l'amplitude du signal d'entrée, le multiplieur 11 se réduit à un simple inverseur du signe de certains coefficients de la mémoire PROM 17. Dans le dispositif de la figure 3 il est aussi possible d'utiliser d'autres techniques et procédés connus pour la détermination de l'instant $T_u$ de passage à zéro du signal s-(t). Par exemple, l'instant $T_u$ s'obtient par interpolation lors du premier passage à zéro dès que deux échantillons de signes inverses ont été détectés ; pour cela, un registre 84 en trait interrompu est intercalé entre la sortie du circuit redresseur 34 et une autre entrée multiple à k'-1 bits du registre 29. Les éléments 31 et 32 sont dès lors inutiles. Lorsque le couple d'échantillons en question est détecté, il est transmis à un interpolateur 85 qui effectue une interpolation linéaire entre les amplitudes des deux échantillons de signes inversés. La fraction de période d'échantillonnage ainsi calculée est ajoutée au temps $T_u$ et fournie sur une sortie multiple 86 au registre tampon 41. La fourniture de $T_u$ à l'interpolateur 85 est symbolisée, à la figure 3 par un commutateur 87 qui doit être mis dans la position inverse de celle représentée sur la figure. Cette technique permet de limiter la durée $t_2$ à une demi-période du signal s(t), soit $1/2f_0$ ; elle est aussi plus précise que la technique indiquée plus haut.

Le mode de réalisation des figures 3 et 6 convient pour un signal MIC à 32 voies à cause de sa grande rapidité de traitement. Cependant, pour traiter une seule ou un petit nombre de voies téléphoniques, il est à la portée de l'homme de l'art de réaliser le traitement de signal selon l'invention par programmation d'un calculateur numérique, qu'il s'agisse de microprocesseur(s) ou de mini ordinateur(s) grâce aux explications données ci-dessus.

L'appareil de la figure 1 peut aussi être réalisé sous forme analogique. Le filtre 8 est par exemple un filtre analogique passe-bas, actif ou passif, excité par une impulsion de Dirac répétée à chaque période de durée $\alpha$. Le multiplieur 11 est un multiplieur analogique connu décrit dans les manuels d'application de composants électroniques analogiques, notamment dans les manuels "Linear Applications" de la société américaine National Semiconductor. Le résonateur 5, dans sa version analogique, doit admettre un facteur de surtension très élevé, supérieur à 500. Pour réaliser ce circuit, on peut par exemple utiliser le résonateur décrit dans le brevet américain 2 905 812 qui se rapporte à un résonateur électromécanique oscillant à 20 kHz. L'interrupteur 4 peut quant-à lui être réalisé au moyen d'un multiplexeur analogique qui est un composant du commerce courant.

De façon non représentée, la détection du passage à zéro du signal s(t) peut aussi se faire aisément au moyen d'un comparateur de tension ayant l'une de ses entrées à 0 volt. Le repérage de l'instant de passage à zéro est par exemple réalisé au moyen d'une rampe de tension se stabilisant à l'instant de la transition du signal binaire de sortie du comparateur. On peut prévoir qu'un convertisseur analogique-numérique fournisse une valeur codée de la tension de rampe atteinte correspondant au temps du passage à zéro $T_u$, ce temps étant par exemple fourni par un compteur numérique contrôlé par le signal de sortie du comparateur.

On notera en outre que l'invention ne se limite pas à la discrimination d'inversions de phase espacées entre elles de 450 ms dans un signal de tonalité, mais qu'elle permet aussi la discrimination de sauts de phase de valeur prédéterminée quelconque, comprise entre 0 et 360°, moyennant la comparaison à deux seuils $S'$ et $S''$ et dans des signaux électriques à monofréquence ou multifréquences autres que téléphoniques, par exemple appartenant à la signalisation ferroviaire ou au réseau électrique interconnecté.

## Revendications

1. Appareil de détection et de discrimination de saut(s) de phase éventuel(s) de valeur $\Delta\phi_e$ prédéterminée dans un signal électrique périodique de fréquence $f_e$ présent dans un signal électrique d'entrée e(t) sous forme d'échantillons numériques échantillonnés à la fréquence $f_S$, comportant au moins entre une borne d'entrée (1) et une borne de sortie (2) un interrupteur (4), un résonateur (5) à fréquence $f_0$, et un séquenceur (7) qui permet, à intervalles réguliers de durée $\alpha$ la détection de phase et la discrimination de chaque saut de phase éventuel de valeur $\Delta\phi_e$, appareil caractérisé en ce que ledit interrupteur (4) et ledit résonateur (5) sont numériques, que l'appareil comporte en outre un convertisseur de fréquence (3) disposé en amont constitué par un filtre temporel (8, 9) qui transforme le spectre de fréquence du signal d'entrée en un spectre de bande continu d'amplitude proportionnelle à celle dudit signal périodique et dont la bande de fréquence est centrée sur ladite fréquence $f_e$ et comprend ladite fréquence $f_0$, et un phasemètre (6) constitué par des moyens de détection (29, 41) suivis de moyens de discrimination (47 à 65), et que ledit séquenceur (7) comporte un générateur d'horloge à la fréquence $f_S$, chaque séquence de durée $\alpha$ se décomposant en deux phases de fonctionnement qui ont chacune une durée fixe, une première phase d'actionnement dudit convertisseur de fréquence (3) et dudit résonateur (5) de durée $t_1$, ledit interrupteur (4) étant fermé, et une deuxième phase de fonctionnement autonome du résonateur, de durée $t_2$, ledit interrupteur étant ouvert, pendant laquelle ledit phasemètre (6) d'une part effectue la détection grâce auxdits moyens de détection (29, 41) pour déterminer l'instant Tu et le sens de passage à zéro SPASu du signal de sortie s(t) dudit résonateur (5) et d'autre part commence la discrimination dudit saut de phase.

2. Appareil selon la revendication 1, caractérisé en ce que la fonction d'ouverture pendant la durée $t_2$ dudit interrupteur (4) est assurée par multiplication temporelle dans un multiplieur (11) des échantillons du signal d'entrée par des coefficients nuls dudit filtre temporel (8) transmis audit multiplieur à la fréquence $f_S$ après la suite de coefficients non nuls qui caractérisent ledit filtre, et que ledit résonateur (5) est une cellule purement récursive du second ordre à gain infini et centrée sur la fréquence de résonance $f_0$.

3. Appareil selon la revendication 1 ou 2, caractérisé en ce que les fréquences $f_0$, $f_S$ et la durée $t_2$ sont choisies telles que :
$bf_S = b'f_0$, les nombres b et b' étant des entiers, avec :
$t_2 f_S \geq b'$
et que ledit instant $T_u$ est représenté, en sortie desdits moyens de détection (29, 41), par le numéro d'ordre chronologique de l'échantillon qui a la plus faible valeur absolue pendant ladite deuxième phase de durée $t_2$.

4. Appareil selon l'une des revendications 1 à 3, caractérisé en ce que, lors de chaque séquence $\alpha$, lesdits moyens de discrimination (47 à 65) effectuent une détermination de phase sur la base d'une double équation aux différences notée CALC entre instants $T_u$ de séquences différentes et de valeurs

SPAS$_u$ associées, aptes à faire apparaître des valeurs nulles à chaque période d'échantillonnage en l'absence de saut de phase et au moins une valeur de phase non nulle suite à l'apparition d'un saut de phase, lesdits moyens de discrimination comportant en outre des moyens de levée d'indétermination et de comparaison à un (des) seuil(s) S (S' et S") (57) qui permettent de valider ladite valeur de phase lorsque cette dernière est sensiblement égale à $\Delta\phi_e$.

5. Application de l'appareil selon l'une des revendications 1 à 4 à un signal de tonalité téléphonique comportant des inversions de phase, ce signal étant émis par un modem de transmissions de données et étant destiné, par reconnaissance de ses inversions de phase, à inhiber le fonctionnement d'un ou plusieurs annuleur(s) d'écho disposé(s) sur la ligne téléphonique à 4 fils associée audit modem.

6. Application de l'appareil selon la revendication 4 à un signal de tonalité téléphonique à la fréquence $f_e$ = 2100 Hz comportant des inversions de phase, ce signal étant émis par un modem de transmissions de données et étant destiné, par reconnaissance de ses inversions de phase, à inhiber le fonctionnement d'un ou plusieurs annuleur(s) d'écho disposé(s) sur la ligne téléphonique associée audit modem, caractérisé en ce que ladite double équation aux différences est :

$$CALC = T_u - 2T_{u-2} + T_{u-4}$$

que les opérations suivantes sont ensuite successivement effectuées par lesdits moyens de discrimination sur la valeur de CALC représentative du saut de phase, cette dernière étant par exemple supposée exprimée en degrés :
- SPAS$_u$ $\oplus$ SPAS$_{u-4}$ = 1 => $\Delta\phi_e \rightarrow \Delta\phi_e + 180°$ ; sinon $\Delta\phi_e \rightarrow \Delta\phi_e$ où le symbole $\oplus$ désigne l'addition modulo 2.
- $\Delta\phi_e \rightarrow \Delta\phi_e$(modulo 360°) où $\Delta\phi_e$(mod 360°) désigne la valeur modulo 360° de $\Delta\phi_e$
- $\Delta\phi_e > 180°$ => $\Delta\phi_e \rightarrow 360° - \Delta\phi_e$ ; sinon $\Delta\phi_e \rightarrow \Delta\phi_e$
- $\Delta\phi_e > S$ => ISPHI$_u$ = 1 ; sinon : ISPHI$_u$ = 0, S étant le seuil de discrimination, inférieur à 180°, et ISPHI$_u$ étant l'indicateur de variation de phase pour ledit instant $T_u$,

et que le saut de phase recherché est validé lorsque :
ISPHI$_u$ = 1 confirme ISPHI$_{u-2}$ = 1.

7. Appareil selon l'une des revendications 1 à 6, caractérisé en ce qu'il est constitué par un calculateur numérique.

8. Appareil destiné à un signal téléphonique MIC à 32 voies, selon l'une des revendications 1 à 6, caractérisé en ce qu'il est réalisé au moyen de circuits logiques microprogrammés, ledit convertisseur de fréquence (3) étant une mémoire PROM et ledit phasemètre (6) comportant des mémoires PROM dont l'une sert à la discrimination du saut de phase.

9. Appareil selon l'une des revendications 1 à 8 dans lequel les signaux d'entrée se présentent sous la forme d'échantillons codés par leur bit de signe.

## Claims

1. Apparatus for detecting and discriminating any phase jump of a predetermined value $\Delta\phi_e$ in a periodic electric signal of frequency $f_e$ contained in an electric input signal e(t) in the form of digital samples sampled at the rate of $f_S$, comprising at least between an input terminal (1) and an output terminal (2) an interrupter (4), a resonator (5) having frequency $f_0$, and a sequencer (7) which permits at regular intervals of a duration $\alpha$ the phase detection and the discrimination of any phase jump which may have the value of $\Delta\phi_e$, which apparatus is characterized in that said interrupter (4) and said resonator (5) are digital, in that the apparatus furthermore includes a frequency converter (3) disposed upstream in the circuit constituted by a time filter (8, 9) which transforms the frequency spectrum of the input signal into a continuous band spectrum of an amplitude proportional to the amplitude of said periodic signal and whose frequency band is centred on said frequency $f_e$ and includes said frequency $f_0$, and a phase meter (6) formed by detection means (29, 41) followed by discriminator means (47 to 65), and in that the sequencer (7) comprises a clock signal generator having frequency $f_S$, each sequence of a duration $\alpha$ dividing into two operational phases, having each a fixed duration, a first operational phase of said

frequency converter (3) and of said resonator (5) of a duration $t_1$ in which said interrupter (4) is closed, and a second operational phase of a duration $t_2$ in which said interrupter is open and said resonator operates autonomously, during which second operational phase said phase meter (6) detects with the detection means (29, 41) the instant $T_u$ and the direction of the zero crossing $SPAS_u$ of the output signal s(t) of the resonator (5) and also commences to discriminate said phase jump.

2. Apparatus as claimed in Claim 1, characterized in that the opening function of the interrupter (4) for the interval $t_2$ is ensured by a time-dependent multiplication in an input signal sample multiplier (11) by zero-coefficients of said time filter (8) transmitted to said multiplier with the frequency $f_S$ after the train of non-zero coefficients featuring said filter, and in that said resonator (5) is a cell of the purely recursive infinite-gain second order type and centred on the resonant frequency $f_0$.

3. Apparatus as claimed in Claim 1 or 2, characterized in that the frequencies $f_0$, $f_S$ and the time-duration $t_2$ are chosen so that $bf_S = b'f_0$, where the numbers b and b' are integers and where $t_2 f_S \geq b'$, and in that said instant $T_u$ is represented at the output of said detection means (29, 41) by the chronological ordinal number of the sample which has the least absolute value during said second phase of duration $t_2$.

4. Apparatus as claimed in one of the Claims 1 to 3, characterized in that during each sequence $\alpha$ said discriminator means (47 to 65) effect a phase determination on the basis of an equation, denoted CALC, in terms of double differences, between the instants $T_u$ of different sequences and associated values $SPAS_u$, suitable to cause zero values to appear at each sampling period in the absence of a phase jump and at least a non-zero phase value after the appearance of a phase jump, said discriminator means moreover having means for eliminating the indeterminacy and for comparison to a threshold S (or thresholds S' and S") (57) which make it possible to validate said phase value when the latter is substantially equal to $\Delta\phi_e$.

5. Application of the apparatus as claimed in one of the Claims 1 to 4, to a telephone tone signal comprising phase inversions, this signal being transmitted by a data transmission modem and intended, by recognition of its phase inversion, to disable the operation of one or a plurality of echo cancellers provided in the 4-wire telephone line associated with said modem.

6. Application of the apparatus as claimed in Claim 4, to a telephone tone signal of frequency $f_e = 2100$ Hz comprising phase inversions, this signal being transmitted by a data transmission modem and being intended, by recognition of its phase inversions, to disable the operation of one or a plurality of echo cancellers provided in the telephone line associated with said modem, characterized in that the double difference equation mentioned above is:

$$CALC = T_u - 2T_{u-2} + T_{u-4}$$

in that thereafter the following operations are successively effected by said discriminator means on the value CALC which is representative of the phase jump while the latter is assumed to be expressed in degrees:
- $SPAS_u \oplus SPAS_{u-4} = 1 \Rightarrow \Delta\phi_e \rightarrow \Delta\phi_e + 180°$;
  or else $\Delta\phi_e \rightarrow \Delta\phi_e$
  where the symbol $\oplus$ designates the addition modulo-2
- $\Delta\phi_e \rightarrow \Delta\phi_e$ (modulo $360°$)
  where $\Delta\phi_e$(mod. $360°$) indicates the modulo-$360°$ value of $\Delta\phi_e$
- $\Delta\phi_e > 180° \Rightarrow \Delta\phi_e \rightarrow 360° - \Delta\phi_e$; or else $\Delta\phi_e \rightarrow \Delta\phi_e$
- $\Delta\phi_e > S \Rightarrow ISPHI_u = 1$; or else: $ISPHI_u = 0$,
  where S is the discrimination threshold, less than $180°$, and $ISPHI_u$ is the phase variation indicator for said instant $T_u$

and in that the phase jump searched for is validated when:
  $ISPHI_u = 1$ confirms $ISPHI_{u-2} = 1$.

7. Apparatus as claimed in one of the Claims 1 - 6, characterized in that it is constituted by a digital calculator.

8. Apparatus intended for use with a 32-channel PCM telephone signal, as claimed in one of the Claims 1 to 6, characterized in that the apparatus is realised by means of micro-programmed logic circuits, said frequency converter (3) being a PROM memory and said phase meter (6) comprising PROM memories one of which is used for discriminating phase jumps.

9. Apparatus as claimed in one of the Claims 1 to 8 in which the input signals appear in the form of samples which are encoded by their sign bit.

**Patentansprüche**

1. Schaltungsanordnung zum Detektieren und Unterdrücken eines etwaigen Phasensprungs bzw. etwaiger Phasensprünge eines vorbestimmten Wertes $\Delta\phi_e$ in einem periodischen elektrischen Signal der Frequenz $f_e$ in einem elektrischen Eingangssignal e(t) in Form digitaler, mit der Frequenz $f_s$ abgetasteter Abtastwerte, wobei zwischen einer Eingangsklemme (1) und einer Ausgangsklemme (2) mindestens ein Schalter (4), ein Resonator (5) mit einer Frequenz $f_0$ sowie ein Folgeschalter (7) vorgesehen sind, der mit regelmäßigen Intervallen mit einer Dauer $\alpha$ die Phasendetektion und die Unterdrückung jedes etwaigen Phasensprungs mit dem Wert $\Delta\phi_e$ ermöglicht, dadurch gekennzeichnet, daß der genannte Schalter (4) und der Resonator (5) digital ausgebildet sind, daß die Schaltungsanordnung außerdem einen vorgeschalteten, aus einem Zeitfilter (8, 9) bestehenden Frequenzwandler (3) aufweist, der das Frequenzspektrum des Eingangssignals umwandelt in ein kontinuierliches Bandspektrum mit einer Amplitude, die der des genannten periodischen Signals proportional ist und wobei das Frequenzband gegenüber der genannten Frequenz $f_e$ zentriert ist und die genannte Frequenz $f_0$ enthält, sowie einen durch die Detektionsmittel (29, 41) und die nachfolgenden Unterdrückungsmittel (47 bis 65) gebildeten Phasenmesser (6), und daß der genannte Folgeschalter (7) einen Taktimpulsgenerator mit der Frequenz $f_s$ aufweist, wobei jede Folge mit der Dauer $\alpha$ in zwei Operationsphasen mit je einer festen Dauer aufgeteilt wird, und zwar eine erste Operationsphase zum Aktivieren des genannten Frequenzwandlers (3) und des genannten Resonators (5) mit einer Dauer $t_1$, wobei der genannte Schalter (4) geschlossen ist, und eine zweite Operationsphase zum selbständigen Funktionieren des Resonators, mit der Dauer $t_2$, wobei der Schalter offen ist, wobei während dieser Aufteilung der genannte Phasenmesser (6) einerseits durch die genannten Detektionsmittel (29, 41) die Detektion durchführt zum Ermitteln des Zeitpunktes Tu und der Richtung des Nulldurchgangs SPASu des Ausgangssignals s(t) des genannten Resonators (5) und andererseits mit der Unterdrückung des genannten Phasensprungs anfängt.

2. Schaltungsanordnung nach Anspruch 1, dadurch gekennzeichnet, daß der geöffnete Zustand wahrend der Dauer $t_2$ des genannten Schalters (4) gewährleistet wird durch Zeitmultiplikation von Abtastwerten des Eingangssignals mit Koeffizienten Null des genannten Zeitfilters (8) in einem Multiplizierer (11), wobei diese Koeffizienten dem Multiplizierer mit der Frequenz $f_s$ nach der Folge von "nicht-Null"-Koeffizienten, die das genannte Filter Kennzeichnen, zugeführt werden, und daß der genannte Resonator (5) eine rein rekursive, gegenüber der Resonanzfrequenz $f_0$ zentrierte Zelle zweiter Ordnung mit unbegrenzter Verstärkung ist.

3. Schaltungsanordnung nach Anspruch 1 oder 2, dadurch gekennzeichnet, daß die Frequenzen $f_0$, $f_s$ und die Dauer $t_2$ derart gewählt worden sind, daß:
$bf_s = b'f_0$ ist, wobei die Zahlen b und b' ganze Zahlen sind, mit:
$t_2 f_s \geq b'$
und daß der genannte Zeitpunkt $T_u$ am Ausgang der genannten Detektionsmittel (29, 41) durch die Nummer der chronologischen Abtastreihenfolge dargestellt wird, die während der genannten zweiten Phase mit der Dauer $t_2$ den kleinsten Absolutwert hat.

4. Schaltungsanordnung nach Anspruch 1 bis 3, dadurch gekennzeichnet, daß die genannten Unterdrückungsmittel (47 bis 65) während jeder Folge $\alpha$ eine als CALC bezeichnete Phasenbestimmung auf Basis einer doppelten Differenzgleichung herbeiführen und zwar zwischen Zeitpunkten $T_u$ verschiedener Folgen und zugeordneter Werte $SPAS_u$, geeignet zum Verursachen von Werten Null in jeder Abtastperiode beim Fehlen eines Phasensprungs und mindestens eines Phasenwertes nicht-Null nach dem Auftritt eines Phasensprungs, wobei diese Unterdrückungsmittel außerdem Mittel der Beendigung der Unbestimmtheit sowie Vergleichsmittel mit einer Schwelle S bzw. mit Schwellen S' und S'' (57) aufweisen, die es ermöglichen, den genannten Phasenwert zu bewerten wenn dieser dem Wert $\Delta\phi_e$ nahezu entspricht.

5. Verwendung der Schaltungsanordnung nach einem de Ansprüche 1 bis 4 bei einem Fernsprech-Tonsignal mit Phasenumkehrung, wobei dieses Signal durch ein Datenübertragungsmodem ausgesendet wird und dazu bestimmt ist, durch Wiedererkennung der Phasenumkehrung, die Wirkung eines oder mehrerer Echokompensatoren in der dem Modem zugeordneten Vier-Draht-Fernsprechleitung auszuschalten.

6. Verwendung der Schaltungsanordnung nach Anspruch 4 bei einem Fernsprech-Tonsignal mit der Frequenz $f_e$ = 2100 Hz mit Phasenumkehrung, wobei dieses Signal durch ein Datenübertragungsmodem ausgesendet wird und dazu bestimmt ist, durch Wiedererkennung der Phasenumkehrung, die Wirkung eines oder mehrerer Echokompensatoren in der dem Modem zugeordneten Vier-Draht-Fernsprechleitung auszuschalten, dadurch gekennzeichnet, daß die doppelte Differenzausgleichung wie folgt ist:

$$CALC = T_u - 2T_{u-2} + T_{u-4}$$

daß die nachfolgenden Handlungen durch die genannten Detektionsmittel bei dem für den Phasensprung repräsentativen Wert CALC nacheinander durchgeführt werden, wobei die Phase als in Graden ausgedrückt vorausgesetzt wird:
- $SPAS_u$ + $SPAS_{u-4}$ = 1 $\rightarrow \Delta\phi_e \rightarrow \Delta\phi_e$ + 180°; sonst $\Delta\phi_e \rightarrow \Delta\phi_e$, wobei das Symbol + die Modulo-2-Addition bezeichnet.
- $\Delta\phi_e \rightarrow \Delta\phi_e$ (modulo 360°)
  wobei $\Delta\phi_e$ (Modulo 360°) den Wert Modulo 360° von $\Delta\phi_e$ bezeichnet
- $\Delta\phi_e$ > 180° => $\Delta\phi_e \rightarrow$ 360° - $\Delta\phi_e$; sonst $\Delta\phi_e \rightarrow \Delta\phi_e$
- $\Delta\phi_e$ > S => $ISPHI_u$ ; sonst: $ISPHI_u$ = 0, wobei S die Detektionsschwelle ist, kleiner als 180°, und wobei $ISPHI_u$ der Phasenverschiebungsindikator für den Zeitpunkt $T_u$ ist,
und daß der gefundene Phasensprung gilt, wenn:
$ISPHI_u$ = 1 dem Wert $ISPHI_{u-2}$ = 1 entspricht.

7. Schaltungsanordnung nach einem der Ansprüche 1 bis 6, dadurch gekennzeichnet, daß sie durch eine digitale Zählschaltung gebildet ist.

8. Schaltungsanordnung für ein 32 Kanal-PCM-Fernsprechsignal nach einem der Ansprüche 1 bis 6, dadurch gekennzeichnet, daß sie durch mikroprogrammierte logische Schaltungen gebildet ist, wobei der Frequenzwandler (3) ein PROM ist und der Phasenmesser (6) PROM-Speicher aufweist, von denen einer zur Detektion des Phasensprungs benutzt wird.

9. Schaltungsanordnung nach einem der vorstehenden Ansprüche, 1 bis 8, wobei die Eingangssignale in Form durch ihr Vorzeichenbit kodierter Abtastwerte erscheinen.

FIG.1

FIG.2a

FIG.2b

FIG.2c

FIG.2d

FIG.3

EP 0 242 912 B1

FIG.4

FIG.5

FIG. 6

FIG. 7